(19) Europäisches Patentamt
European Patent Office
Office européen des brevets

(11) **EP 4 531 265 A1**

(12) **EUROPEAN PATENT APPLICATION**

(43) Date of publication:
**02.04.2025 Bulletin 2025/14**

(21) Application number: **23217042.3**

(22) Date of filing: **15.12.2023**

(51) International Patent Classification (IPC):
*H02P 5/00* (2016.01)     *H02P 5/74* (2006.01)
*H02P 21/00* (2016.01)    *H02P 21/22* (2016.01)
*H02P 27/08* (2006.01)

(52) Cooperative Patent Classification (CPC):
**B60L 15/2036; B60L 15/025; H02P 5/00;
H02P 5/74; H02P 21/0003; H02P 21/22;
H02P 27/08;** B60L 2220/16; B60L 2220/42;
B60L 2240/421; B60L 2240/461; H02P 2205/07

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.09.2023 CN 202311268835**

(71) Applicant: **Zhejiang Dingli Machinery Co., LTD.
Huzhou, Zhejiang Province 313219 (CN)**

(72) Inventors:
• **Xu, Zhong
  HUZHOU, 313219 (CN)**
• **Xu, Shugen
  HUZHOU, 313219 (CN)**

(74) Representative: **Cleanthous, Marinos
IOANNIDES CLEANTHOUS AND CO LLC
4 Prometheus Street, 3 Floor
1065 Nicosia (CY)**

(54) **DIFFERENTIAL STEERING CONTROL METHOD FOR VEHICLE**

(57)     The present disclosure discloses a differential steering control method for a vehicle, which is applied to a motor system including a three-phase bridge type voltage inverter and relates to the technical field of motor modulation. The differential steering control method includes: acquiring feedback speeds of motors; setting target speeds of the vehicle; comparing the feedback speeds with the target speeds, and obtaining given current values of the motors through a proportion integration differentiation (PID) controller; acquiring feedback current values of the motors; comparing the given current values with the feedback current values, and obtaining given voltage values of the motors through the PID controller; calculating a modulation ratio M of voltage vectors of the motors, and indicating, when M is greater than $M_0$, that the motors have entered an over-modulation mode; in the over-modulation mode, calculating and obtaining, according to the given voltage values, voltage space vectors of the motors and corresponding duty ratios by using pulse width modulation (PWM); outputting control signals to an inverter by using a digital signal processor (DSP) according to the voltage space vectors of the motors and the corresponding duty ratios, and performing over-modulation control on the motors; and enabling the motors to control differential steering of the vehicle through PWM signals. The control precision of differential steering of the vehicle is improved.

Acquire rotating speeds of left and right motors, obtain feedback speeds, set speeds of left and right wheels of a vehicle, and obtain target speeds — S110

Compare the feedback speeds with the target speeds, and obtain given current values of currents of the left and right motors through a PID controller — S120

Acquire the currents of the left and right motors, obtain feedback current values, compare the given current values with the feedback current values, and obtain given voltage values of voltages of the left and right motors through the PID controller — S130

Calculate a modulation ratio M of voltage vectors of the left and right motors, and indicate, when M is greater than M0, that the motors have entered an over-modulation mode — S140

In the over-modulation mode, calculate and obtain, according to the given voltage values, voltage space vectors of the motors and corresponding duty ratio values by using a space vector PWM — S150

Output control signals to an inverter by using a DSP according to the voltage space vectors of the motors and the corresponding duty ratio values, and perform over-modulation control on the motors — S160

Control, by the motors, differential steering of the vehicle through PWM signals — S170

**FIG. 1**

**Description**

**TECHNICAL FIELD**

The present disclosure relates to the technical field of motor modulation, and in particular, to a differential steering control method for a vehicle, which is applied to a motor system including a three-phase bridge type voltage inverter.

**BACKGROUND**

With the continuous development and popularization of electric vehicles, it is more and more important to optimize and precisely control a motor system. Over-modulation control of a motor is an important control strategy that can allow the motor to maintain stability beyond its normal operating range and provide an additional output capacity. However, existing over-modulation control methods have some problems in terms of control precision and stability. Therefore, a new technical solution is needed to improve the precision and effect of over-modulation control of a vehicle motor.

In the related technology, for example, Chinese patent document CN109672381B provides an over-modulation control method for a motor, which relates to a motor modulation technology. The method includes: acquiring an error signal and a current feedback signal between a feedback rotating speed of the motor and a given speed, and obtaining instruction voltage signals U$\alpha$* and U$\beta$* of the motor through coordinate transformation from a two-phase rotating coordinate system to a two-phase stationary coordinate system, obtaining a two-variable function F ($\theta$h, $\theta$r) of an angle pair ($\theta$h, $\theta$r) through space vector pulse width modulation (SVPWM), obtaining a modulation ratio MI, and calculating the modulation ratio MI; obtaining a value of the angle pair ($\theta$h, $\theta$r) according to a value of the modulation ratio MI because the modulation ratio MI is in one-to-one correspondence to the angle pair ($\theta$h, $\theta$r); and calculating a voltage vector required by the motor and a corresponding duty ratio according to the value of the angle pair ($\theta$h, $\theta$r), and obtaining six driving signals of an inverter. However, this scheme has the problems of trajectory limitations of an angle function and lack of proportion integration differentiation (PID) control. These problems may lead to low precision of over-modulation control of the motor.

**SUMMARY**

1. Technical problem to be solved

For the problem of low precision of differential steering control of a vehicle in the prior art, the present disclosure provides a differential steering control method for a vehicle. The precision of differential steering control of a vehicle is improved by parallel application of speed closed-loop control, current closed-loop control, an over-modulation mode, and the like.

**2. Technical solutions**

The objective of the present disclosure is achieved by the following technical solutions:

Embodiments of this specification provide a differential steering control method for a vehicle, including: acquiring rotating speeds of left and right motors, and obtaining feedback speeds; setting speeds of left and right wheels of the vehicle, and obtaining target speeds; comparing the feedback speeds with the target speeds, and obtaining given current values of currents of the left and right motors through a proportion integration differentiation (PID) controller; acquiring the currents of the left and right motor, and obtaining feedback current values; comparing the given current values with the feedback current values, and obtaining given voltage values of voltages of the left and right motor through the PID controller; calculating a modulation ratio M of voltage vectors of the left and right motor, and indicating, when M is greater than $M_0$, that the motors have entered an over-modulation mode; in the over-modulation mode, calculating and obtaining, according to the given voltage values, voltage space vectors of the motors and corresponding duty ratios by using space vector pulse width modulation (PWM); outputting control signals to an inverter by using a digital signal processor (DSP) according to the voltage space vectors of the motors and the corresponding duty ratios, and performing over-modulation control on the motors; and enabling the motors to control differential steering of the vehicle through PWM signals.

Further, the step of comparing the given current values with the feedback current values, and obtaining given voltage values of voltages of the left and right motors through the PID controller includes: calculating difference values between the given current values and the feedback current values to obtain current errors e(k); and outputting the given voltage values u(k) according to the current errors e(k) by using the PID controller.

Further, the given voltage values u(k) are calculated through the following formula:

$$u(k) = Kp * e(k) + Ki * \sum e(k) + Kd * (e(k) - e(k-1))$$

wherein Kp is a proportional gain of the PID controller; Ki is an integral gain of the PID controller; Kd is a differential gain of the PID controller; e(k) is an error between the given current values and the feedback current values at a current sampling moment; and e(k - 1) is an error between the given current values and the feedback current values at a previous sampling moment.

Further, the step of calculating a modulation ratio M of voltage vectors of the left and right motor, and indicating, when M is greater than the threshold $M_0$, that the motors have entered an over-modulation mode includes: a three-phase bridge type voltage inverter includes six non-zero voltage space vectors and two zero voltage space vectors, and a direct current bus voltage of the inverter is $U_{dc}$; a radius $U_{max}$ of an inscribed circle of the hexagon is determined if the six non-zero voltage space vectors form a hexagon; and when a given voltage vector exceeds a range of the hexagon, that is, when the modulation ratio M is greater than the threshold $M_0$, the motors enter the over-modulation mode; the modulation ratio M is calculated through the following formula:

$$M = U_{max}/U_{dc}$$

wherein $U_{max}$ is the radius of the inscribed circle of the hexagon, which represents a maximum output voltage vector amplitude of the inverter.

Further, the step of: in the over-modulation mode, calculating and obtaining, according to the given voltage values, voltage space vectors of the motors and corresponding duty ratios by using PWM includes: determining whether the modulation ratio M is greater than the threshold $M_0$; when the modulation ratio M is greater than the threshold $M_0$, indicating that the given voltage vector $U_{ref}$ exceeds the range of the hexagon, and selecting a substitute voltage vector $U_{alt}$ of the given voltage vector $U_{ref}$; calculating action time $T_0$ when the substitute voltage vector is a zero voltage vector $U_0$; and calculating, according to the action time $T_0$ of the zero voltage vector, the voltage space vector $U_{out}$ and the corresponding duty ratio $D_{out}$ by using the PWM.

Further, the action time $T_0$ of the zero voltage vector $U_0$ is used as a start point of determining over-modulation; when $T_0$ is less than zero, it is determined that the over-modulation mode is activated; action time $T_i$ of a basic voltage vector of an ith moment is calculated, wherein

$$T_i = T_s * \sin\theta_1 * U_{max}/U_{dc}$$

action time $T_{i+1}$ of a basic voltage vector of an (i+1)th moment is calculated, wherein

$$T_{i+1} = T_s * \sin\theta_2 * U_{max}/U_{dc}$$

action time $T_s$ of the given voltage vector $U_{ref}$ within an original PWM cycle before over-modulation occurs is calculated;
$T_0$ is calculated through the following formula:

$$T_0 = T_s - T_i - T_{i+1}$$

wherein $\theta_1$ and $\theta_2$ are electric angles of the basic voltage vectors at the ith moment and the (i+1)th moment; an angle sum of $\theta_1$ and $\theta_2$ is $\pi/3$; $U_{ref}$ is the given voltage vector; $U_{alt}$ is the substitute voltage vector; $U_0$ is the zero voltage vector; $T_0$ is the action time of the zero voltage vector; $T_i$ and $T_{i+1}$ are respectively the action times of the basic voltage vector at the ith moment and the (i+1)th moment; $T_s$ is action time of the given voltage vector $U_{ref}$ within a current PWM cycle; $U_{max}$ is the direct current bus voltage; and $U_{dc}$ is a direct current voltage.

Further, the voltage space vector $U_{out}$ and the corresponding duty ratio $D_{out}$ are calculated by using the PWM according to the action time $T_0$ of the zero voltage vector; a position of the voltage space vector is determined by using a space vector PWM calculation method according to the action time $T_0$ of the zero voltage vector $U_0$, the action times $T_i$ and $T_{i+1}$ of the basic voltage vectors, and time $T_s$ of a PWM cycle; and a projection of the voltage space vector under a three-phase coordinate and a time proportion corresponding to the voltage space vector are calculated as a duty ratio of each bridge arm of the inverter according to the position of the voltage space vector, a maximum amplitude $U_{max}$ of the direct current bus voltage, and the direct current voltage $U_{dc}$.

Further, the step of outputting control signals to an inverter by using a DSP according to the voltage space vectors of the motors and the corresponding duty ratios, and performing over-modulation control on the motor includes: adding an output signal of a speed closed-loop PID controller to an output signal of a current closed-loop PID to obtain the given voltage value; inputting the given voltage value to a reverse Park transformation module, and transforming the given voltage value into a given voltage under an $\alpha\beta$ coordinate; inputting the given voltage under the $\alpha\beta$ coordinate to a space vector PWM module for over-modulation to obtain the voltage space vector and the duty ratio corresponding to each motor; outputting the voltage space vector and the duty ratio to six metal oxide semiconductor (MOS) transistors configured to control upper and lower bridge arms of the inverter to perform over-modulation control on the motor; acquiring feedback current signals from two phases of an output end of the motor; inputting the acquired two phases of currents to a current sampling module to obtain sampled current values; calculating and obtaining three phases of currents according to the sampled current values and the Kirchhoff's Current Law; inputting the three phases of currents to a Clarke transformation module, and transforming the three phases of currents to be under the $\alpha\beta$ coordinate; inputting the currents under the $\alpha\beta$ coordinate to the Park transformation module, and transforming the currents to be under a dq coordinate; and taking the currents under the dq coordinate as feedback signals, and inputting the feedback signals to the current closed-loop PID controller.

Further, the step of enabling the motors to control differential steering of the vehicle through PWM signals includes: outputting, by an upper computer, target rotating speed control signals $\omega l_1$ and $\omega r_1$ of the left and right wheels of the vehicle; inputting $\omega l_1$ and $\omega r_1$ to the speed closed-loop PID controller; outputting, by the speed closed-loop PID controller, PWM control signals of the motors of the left and right wheels; controlling, by the motors of the left and right wheels, rotating speeds $\omega l_2$ and $\omega r_2$ of the left and right wheels of the vehicle according to the PWM signals; and acquiring the rotating speeds $\omega l_2$ and $\omega r_2$ of the left and right wheels of the vehicle, and feeding back the rotating speeds to the speed closed-loop PID controller, wherein when the rotating speeds $\omega l_2$ and $\omega r_2$ of the left and right wheels of the vehicle are equal, the vehicle is driven along a straight line; and when the rotating speeds $\omega l_2$ and $\omega r_2$ of the left and right wheels of the vehicle are unequal, a driving trajectory of the vehicle is a concentric arc.

**3. Beneficial effects**

Compared with the prior art, the present disclosure has the advantages below:

(1) The feedback speeds are compared with the target speeds through speed closed-loop control, and the given current values are calculated using the PID controller, so that it is ensured that the rotating speeds output by the motors are consistent with the target speeds. The given current values are compared with the feedback current values through current closed-loop control, and the given voltage values are calculated using the PID controller, so that the currents output by the motors reach desired values. The dual closed-loop control system can improve the precision of differential steering control of the vehicle.

(2) The control signals for adjusting the given current values and the given voltage values are calculated according to differences between feedback signals and target signals. The given current values and the given voltage values can be adaptively adjusted by using the PID controller according to a dynamic performance requirement and an error of the system, which further improves the precision and stability of control. The PID controller combines the feedback signals with the target signals, and can effectively suppress oscillations and a stability deviation of the system through proportional, integral, and differential operations, so that the motor makes a more accurate and sensitive response, which further improves the precision of differential steering control of the vehicle.

(3) The voltage vector modulation ratio M of the motors is calculated, so that when the modulation ratio M exceeds the threshold, it indicates that the motors have entered the over-modulation mode. In over-modulation mode, a space vector PWM technology is used to control the motors. The appropriate voltage vector and duty ratio are selected to achieve the over-modulation control of the motors, so that the motors can still maintain stability even when it exceeds a normal operating range, which improves the output capacity and efficiency, and improves the precision of differential steering control of the vehicle.

**BRIEF DESCRIPTION OF THE DRAWINGS**

FIG. 1 is an exemplary flowchart of a differential steering control method for a vehicle according to some embodiments of this specification;
FIG. 2 is a schematic diagram of calculating a modulation ratio M according to some embodiments of this specification;
FIG. 3 is a schematic diagram of a basic voltage vector according to some embodiments of this specification;
FIG. 4 is a schematic diagram of calculating a voltage space vector and a duty ratio according to some embodiments of this specification;
FIG. 5 is a schematic diagram of an over-modulation control of motors according to some embodiments of this specification;
FIG. 6 is a schematic diagram of motor vector transformation according to some embodiments of this specification; and
FIG. 7 is a flowchart of an over-modulation algorithm of motors according to some embodiments of this specification.

## DETAILED DESCRIPTION OF THE EMBODIMENTS

A method and system provided by the embodiments of this specification will be described in detail below in conjunction with accompanying drawings.

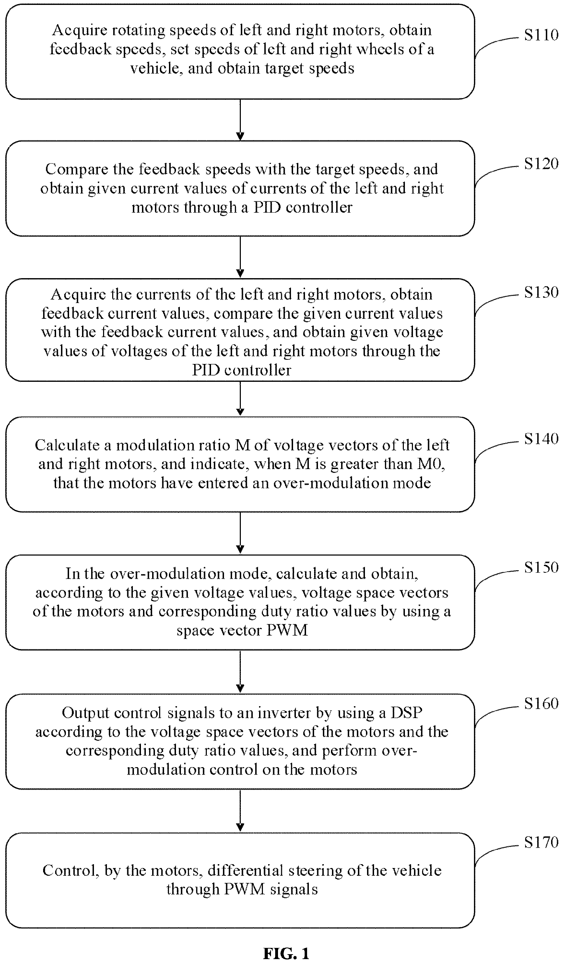

FIG. 1 is an exemplary flowchart of a differential steering control method for a vehicle according to some embodiments of this specification. As shown in FIG. 1, a differential steering control method for a vehicle includes: S110, speeds of left and right wheels of the vehicle are set, and target speeds are obtained; rotating speeds of left and right motors of the vehicle are acquired through a sensor, an encoder, or another device, so as to obtain feedback signals of actual rotating speeds of the motors. The target speeds of the left and right wheels of the vehicle are set according to a control requirement of the vehicle or a user input, and the target speeds are used as target values of differential steering control. S120, given current values of currents of the left and right motor are obtained through a PID controller: The given current values of the currents of the left and right motors are calculated using the PID controller by comparing the feedback speeds with the target speeds. The values are configured to control rotations of the motors. S130, the given current values are compared with feedback current values, and given voltage values of voltages of the left and right motors are obtained through the PID controller; and actual values of the currents of the left and right motor are acquired by a current sensor or another device, so as to obtain feedback signals of the currents. The given current values are compared with the feedback current values using the PID controller, and the given voltage values of the voltages of the left and right motors are calculated. The values are configured to control voltage outputs of the motors. S140, a modulation ratio M of voltage vectors of the left and right motors are calculated, and it is indicated, when M is greater than $M_0$, that the motors have entered an over-modulation mode: The modulation ratio M of the vectors of the left and right voltage motors is obtained by calculation. S150, in the over-modulation mode, voltage space vectors of the motors and corresponding duty ratios are calculated and obtained according to the given voltage values by using space vector PWM. These values are configured to control a voltage signal output by an inverter. S160, control signals are output to the inverter by using a DSP according to the voltage space vectors of the motors and the corresponding duty ratios, and over-modulation control is performed on the motors. S170, the motors control differential steering of the vehicle through PWM signals, and a modulation signal output by the inverter is converted into a motor control signal by using the PWM signals. The steering control of the vehicle is achieved by controlling the rotating speeds and running directions of the left and right wheels.

Difference values between the feedback speeds and the target speeds of the motors are calculated, and speed errors v(k) of the motors are obtained. The given current values i(k) are output using the PID controller according to the speed errors v(k). The speed errors are obtained by comparing the feedback speeds with the target speeds, and the PID controller can adjust the given current values in real time according to the errors. The real-time adjustment can make a quick response to a change of a steering requirement and precisely control output currents of the motors, so as to provide precise steering control for the vehicle. Integral and differential parts of the PID controller can consider historical changes and change rates of the errors, thus suppressing oscillations of a system. Due to the integral and differential effects of the PID controller, the system can better adapt to the change of the steering requirement, and the stability of the system is improved.

Difference values between the given current values and the feedback current values are calculated, and current errors e(k) are obtained. The current errors are obtained by comparing the given current values with the feedback current values, and the PID controller can adjust the given voltage values in real time according to the errors. By the precise current control, the vehicle can achieve more precise differential adjustment in a steering process, so that the stability and adjustability of steering are improved. The given voltage values u(k) are output according to the current errors e(k) by using the PID controller. The given voltage values u(k) are calculated through the following formula:

$$u(k) = Kp * e(k) + Ki * \sum e(k) + Kd * (e(k) - e(k-1))$$

where Kp is a proportional gain of the PID controller; Ki is an integral gain; Kd is a differential gain; e(k) is an error between the given current values and the feedback current values at a current sampling moment; and e(k - 1) is an error between the given current values and the feedback current values at a previous sampling moment. The proportional item Kp can enable the currents to make a quick response to changes in the given values, which improves the instantaneity of steering. The integral item Ki can eliminate a steady state error, which improves the stability. The differential item Kd improves the sensitivity to current changes and is conductive to suppressing motor disturbance. Use of the current error e(k) and the previous error e(k-1) can further improve the stability. The PID closed-loop control causes the currents to precisely follow the given values, so as to achieve precise torque control. The precise torque control is then converted into wheel rotating speed control, so as to finally achieve high-precision differential steering. Two closed-loop controls are equivalent to double insurances, which greatly improves the stability and precision of steering control.

In this embodiment, for the PID controller, Kp=0.8, Ki=0.5, and Kd=0.2. The given current value of the current sampling moment is set to be I_setpoint; the feedback current value of the current sampling moment is set to be I_feedback; the given current value of the previous sampling moment is set to be I_setpoint_prev; and the feedback current value of the previous sampling moment is set to be I_feedback_prev. Firstly, the current error (e) is calculated: e = I_setpoint - I_feedback; and a control signal is calculated: PID_output = P * e + I * Σe + D * (e - e_prev).

The PID controller can quickly adjust and output the given voltage values according to the current errors to make the current errors tend to be zero. During steering, the vehicle can quickly adjust differential speeds, which reduces a steering error and delay and achieves more precise steering control. The integral part can eliminate the steady state error to ensure that the current errors tend to be zero for a long time. The differential part can suppress the oscillations of the system to cause the control system to be more stable. Stable steering control means that the vehicle can steer at a more stable speed and differential speed and maintain steadiness and controllability of driving.

In this embodiment, an encoder of the left wheel acquires a feedback speed $\omega l$=10 rad/s, and a target speed of the right wheel is set to be $\omega r$=15 rad/s. $\omega l$ is compared with $\omega r$, and the PID controller outputs a given current value I*=20A. A current feedback Il=18A is acquired, and the PID controller outputs a given voltage value *=300V. A modulation ratio M= U*/U$_{dc}$=1.2 is calculated, and an over-modulation mode is activated. An over-modulation voltage vector U$_{over}$ is equal to 340 V, and a duty ratio D=85% is calculated by using SVPWM. A DSP outputs a PWM signal to drive an inverter to achieve over-modulation control. Due to the left wheel $\omega l$=10 rad/s and the right wheel $\omega r$=15 rad/s, the vehicle achieves precise differential steering. The over-modulation control is achieved by calculating the modulation ratio, so that a larger motor torque can be obtained, and the precision and flexibility of differential steering are improved.

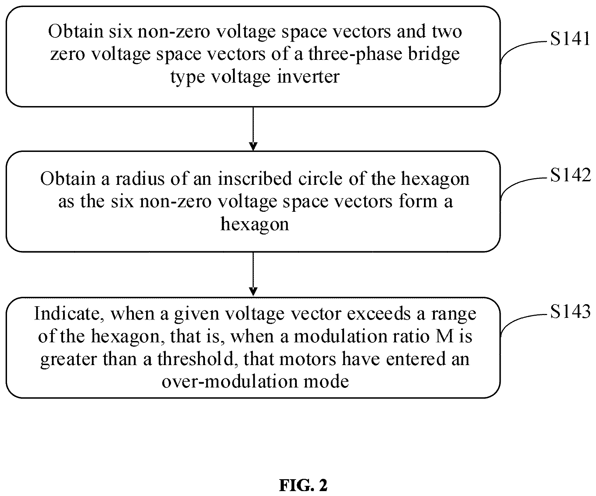

FIG. 2 is a schematic diagram of calculating a modulation ratio M according to some embodiments of this specification. As shown in FIG. 2, the step that a modulation ratio M of voltage vectors of the left and right motors is calculated, and it is indicated, when M is greater than the threshold M$_0$, that the motors have entered an over-modulation mode includes: S141, a three-phase bridge type voltage inverter includes six non-zero voltage space vectors and two zero voltage space vectors, and a direct current bus voltage of the inverter is U$_{dc}$; S142, a radius U$_{max}$ of an inscribed circle of the hexagon is determined if the six non-zero voltage space vectors form a hexagon; and S143, when a given voltage vector exceeds a range of the hexagon, that is, when the modulation ratio M is greater than the threshold M$_0$, the motor enters the over-modulation mode. The modulation ratio M is calculated through the following formula:

$$M = U_{max}/U_{dc}$$

where U$_{max}$ is the radius of the inscribed circle of the hexagon, which represents a maximum output voltage vector amplitude of the inverter.

Specifically, whether the motors are in the over-modulation mode can be determined by calculating the modulation ratio M and comparing the modulation ratio M with the preset threshold M$_0$. The over-modulation mode means that the given voltage vector exceeds the normal range of the hexagon. The over-modulation control can improve the precision and responsiveness of motor outputs can be improved. A range of output voltages of the motors can be limited by determining the radius of the inscribed circle of the hexagon composed of the six non-zero voltage space vectors. This can ensure that the output voltages of the motors can be within a controllable range, avoid an extremely large or small output, and improve the precision of differential steering control. The over-modulation control can control the differential steering of the vehicle more precisely, thus improving the steering precision and response speed.

More specifically, whether the voltages exceed the range of the hexagon is determined in the over-modulation mode by comparing the modulation ratio with the preset threshold M$_0$. When the modulation ratio M is greater than the threshold M$_0$, it is indicated that the given voltage vector U$_{ref}$ exceeds the range of the hexagon, and a substitute voltage vector U$_{alt}$ of the given voltage vector U$_{ref}$ is selected, where U$_{ref}$ is usually a neighboring effective voltage vector, which is a voltage vector close to a boundary of the hexagon. Through U$_{ref}$, the voltage output by each motor can be still kept in the controllable range in the over-modulation mode. Action time T$_0$ when U$_{ref}$ is a zero voltage vector U$_0$ is calculated. The substitute voltage vector is selected, so that a zero voltage vector may be generated. Action time of the zero voltage vector is calculated, that is, a length of the action time of the substitute voltage vector is determined. The action time will be configured for subsequent PWM calculation. It is general that M$_0$ can be set to be 1.05 to 1.2 times a ratio of a maximum output voltage of an inverter to a direct current bus voltage. In this embodiment, the threshold M$_0$ is preferably 1.

The voltage space vector $U_{out}$ and the corresponding duty ratio $D_{out}$ are calculated by using the PWM according to the action time $T_0$ of the zero voltage vector. The action time of a pure zero voltage vector will allocate a zero level to a corresponding PWM waveform, and the action time of the substitute voltage vector will be configured to allocate a non-zero level for a corresponding PWM waveform.

In this embodiment, the three-phase bridge type inverter outputs the six non-zero basic voltage vectors to form the hexagon. The radius of the inscribed circle is $U_{max}=400V$. The bus voltage of the inverter is $U_{dc}=380V$. It is defined that the threshold is K=1.05. A give voltage vector amplitude is calculated to be U=420V. U, $U_{max}$, and $V_{dc}$ are substituted into a formula to calculate the modulation ratio: $M=U/U_{dc}=420/380=1.11>K$. It is determined that the motor has entered the over-modulation mode. In the over-modulation mode, a space vector and a PWM duty ratio are recalculated. The over-modulation mode can be flexibly used by determining the modulation ratio threshold. During over-modulation, a larger torque can be generated, thus improving the precision and flexibility of differential steering.

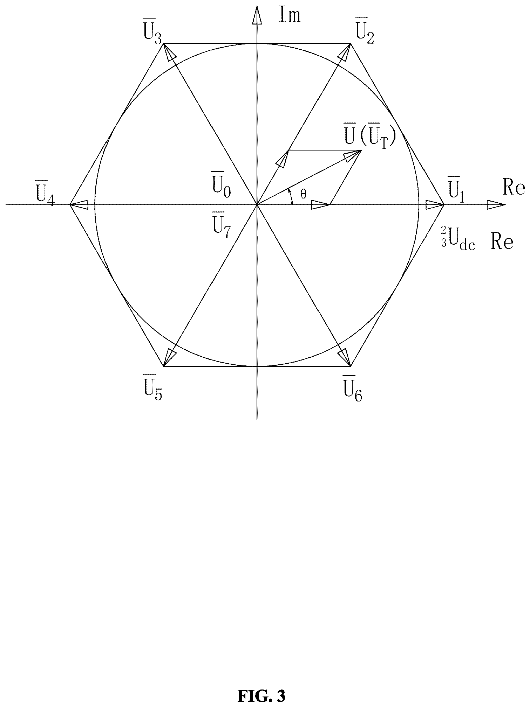

FIG. 3 is a schematic diagram of a basic voltage vector according to some embodiments of this specification. As shown in FIG. 3, a differential steering control system is based on the concept of the basic voltage vector. The output voltage of each motor is achieved through space vector PWM control. The system uses a regular hexagon as a control range of the basic voltage vector, and achieves precise differential steering control by adjusting calculation of the voltage space vector and the duty ratio.

The action time $T_0$ of the zero voltage vector $U_0$ is used as a start point of determining over-modulation; when $T_0$ is less than zero, it is determined that the over-modulation mode is activated. More precise steering control can be achieved by calculating the action time of the basic voltage vector and adjusting the action time according to the position of the given voltage vector. This can improve the accuracy and stability of steering of the vehicle.

Action time $T_i$ of the basic voltage vector of an ith moment is calculated, wherein $T_i = T_s * \sin\theta_1 * U_{max}/U_{dc}$; action time $T_{i+1}$ of the basic voltage vector of an (i+1)th moment is calculated, wherein $T_{i+1} = T_s * \sin\theta_2 * U_{max}/U_{dc}$; action time $T_s$ of the given voltage vector $U_{ref}$ within an original PWM cycle before over-modulation occurs is calculated; $T_0$ is calculated through the following formula: $T_0 = T_s - T_i - T_{i+1}$; and $T_s$ is the action time of the given voltage vector within the original PWM cycle, which reflects a basic feature of the voltage vector. $\sin\theta_1$ and $\sin\theta_2$ are respectively proportions for calculating the action times of two adjacent vectors, thus achieving $\pi/3$ phase distribution and improving the PWM control performance. $U_{max}$ is the maximum output voltage amplitude of the inverter. By comparison with $U_{dc}$, an over-modulation condition is calculated, and a modulation range of the inverter is expanded. Ti is calculated according to a ratio of $U_{max}$ to $U_{dc}$, so that reasonable allocation of the voltage amplitude after over-modulation is achieved, and the over-modulation control effect is optimized. The time proportions of the adjacent vectors are distributed reasonably, which is conductive to reducing impact and improving the stability, thus improving the precision of steering control of the vehicle.

Specifically, $\theta_1$ and $\theta_2$ are electric angles of the basic voltage vectors at the ith moment and the (i+1)th moment, and an angle sum of $\theta_1$ and $\theta_2$ is $\pi/3$, so that voltage vectors of adjacent moments are distributed alternately. Positions of the voltage vectors change smoothly, which is conductive to reducing fluctuations of magnetic energy of an iron core of the moving motor and reducing vibrations and noises. The adjacent vectors are distributed at 60 degrees, so that the calculation of the SVPWM can be simplified. A simple vector superposition rule is used to reduce the calculation amount of the control system and lower the implementation difficulty. The adjacent vectors distributed at 60 degrees are matched with a physical characteristic of a three-phase winding, which is conductive to balancing a three-phase current and reducing current fluctuations. The adjacent vectors are distributed at 60 degrees, which can avoid a high current impact caused by large changes in the voltage vectors. The SVPWM is a PWM method in motor vector control. In this method, by use of the concept of the voltage space vector, eight on-off states of the inverter are expressed by six non-zero voltage vectors and two zero voltage vectors. The six non-zero voltage vectors form a hexagonal voltage space vector range. A toggle state and a corresponding duty ratio of each bridge arm of the inverter can be determined by calculating a projection of the given voltage vector in the hexagonal region, so that a size and position of the voltage space vector of the motor can be flexibly controlled.

$T_s$ is action time of the given voltage vector $U_{ref}$ within a current PWM cycle; $U_{max}$ is the direct current bus voltage; and $U_{dc}$ is a direct current voltage. $U_{ref}$ is the given voltage vector; $U_{alt}$ is the substitute voltage vector; $U_0$ is the zero voltage vector; $T_0$ is the action time of the zero voltage vector; and $T_i$ and $T_{i+1}$ are respectively the action times of the basic voltage vector at the ith moment and the (i+1)th moment. During SVPWM control, to achieve smooth transitioning, the zero voltage vector needs to be added, that is, the action time of the zero voltage vector is added. This over-modulation control can effectively make use of the direct current bus voltage. The voltage modulation range is expanded without increasing a current and a voltage, thus increasing the utilization rates of both the inverter and the motor and improving the capacity and efficiency of the system.

Specifically, $T_s$ is the action time of the given voltage vector within the original PWM cycle before over-modulation occurs. A calculation formula of the action time is: $T_s = T_{pwm} * T_1/T_{pwm}$, wherein Tpwm is the time of the original PWM cycle, and T1 is the action time of the given voltage vector within the original PWM cycle. That is, before the over-modulation, within a PWM cycle, a proportion of the action time of the given voltage vector in the PWM cycle is $T_s$.

In this embodiment, the position of the given voltage vector is $\theta=30°$, the maximum voltage is $U_{max}=300$ V, and the bus voltage is $U_{dc}$=220 V. The action times of the adjacent vectors are calculated to be T1=0.5 ms, and T2=0.3 ms. The action time within the original PWM cycle is Ts=T1+T2=0.8 ms. If the action time of the zero vector is calculated to be T0=Ts-T1-T2=-0.1 ms<0, it is determined that over-modulation is activated. $U_{max}$ is compared with $U_{dc}$ to determine that an over-modulation condition is satisfied. It is calculated according to T1/T2=0.5/0.3=1.67 that T1'=0.4 ms, and T2'=0.24 ms. Action time within a new PWM cycle is Ts'=T1'+T2'=0.64 ms. The position of a voltage vector angle after adjustment is kept at 30°, thus achieving precise steering control.

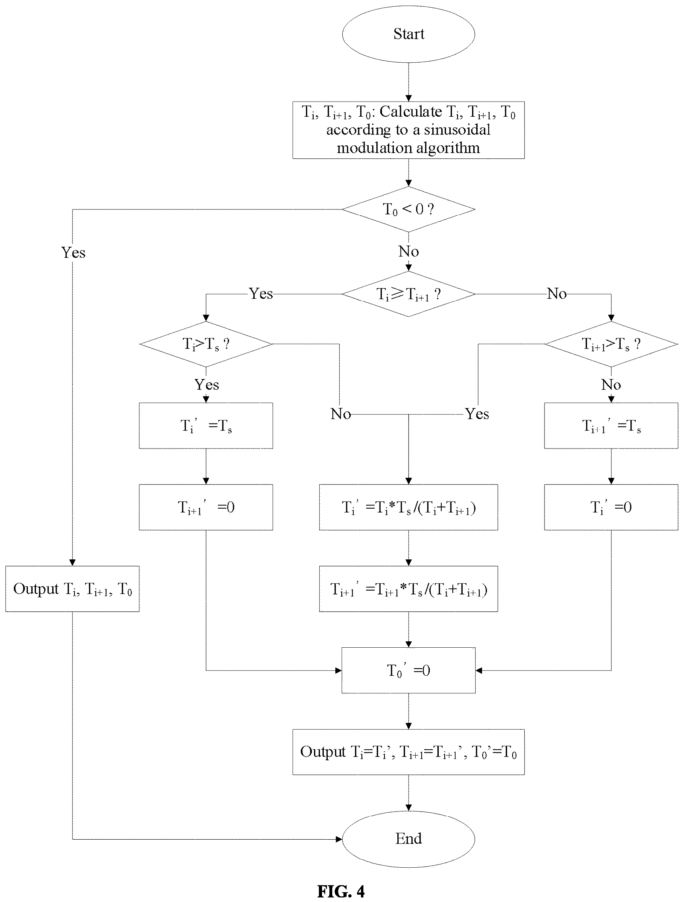

FIG. 4 is a schematic diagram of calculating a voltage space vector and a duty ratio according to some embodiments of this specification. As shown in FIG. 4, the voltage space vector $U_{out}$ and the corresponding duty ratio $D_{out}$ are calculated by using the PWM according to the action time $T_0$ of the zero voltage vector; a position of the voltage space vector is determined by using a space vector PWM calculation method according to the action time $T_0$ of the zero voltage vector $U_0$, the action times $T_i$ and $T_{i+1}$ of the basic voltage vectors, and time $T_s$ of a PWM cycle; and a projection of the voltage space vector under a three-phase coordinate and a time proportion corresponding to the voltage space vector are calculated as a duty ratio of each bridge arm of the inverter according to the position of the voltage space vector, a maximum amplitude $U_{max}$ of the direct current bus voltage, and the direct current voltage $U_{dc}$.

The space vector PWM calculation method is used to determine the position of the voltage space vector. The differential steering control system can more precisely obtain a desired motor output by precisely calculating the position of the voltage space vector and apply the motor output to a steering operation. The projection of the voltage space vector under the three-phase coordinate and the time proportion corresponding to the voltage space vector can be calculated as the duty ratio of each bridge arm of the inverter on the basis of the position of the voltage space vector, the maximum amplitude of the direct current bus voltage, and the direct current voltage. By precisely calculating duty ratio, the system can precisely adjust an on-off state of the inverter to control a voltage output of the motor. It is conductive to achieving precise steering control and providing an accurate steering torque, thus improving the precision and controllability of differential steering.

In this embodiment, it is set that the action time of the zero voltage vector is T0=0.2 ms, the action time of an over-modulation voltage vector is Ta=0.5 ms, and the PWM cycle is Ts=1 ms. The SVPWM method is used to calculate the position of the space vector to be 60° according to T0, Ta, and Ts. The direct current bus voltage is $U_{dc}$=300 V, and the given voltage vector amplitude is $U_{ref}$=340 V, which is greater than $U_{dc}$, so that it is in an over-modulation state. Three phases of voltages VA=210 V, VB=344 V, and VC=188 V are calculated according to the position 60° of the space vector, $U_{dc}$=300 V, and $U_{ref}$=340 V. The duty ratios of the three phases of voltages are respectively VA/$U_{dc}$=70%, VB/$U_{dc}$=98%, and VC/$U_{dc}$=63%.

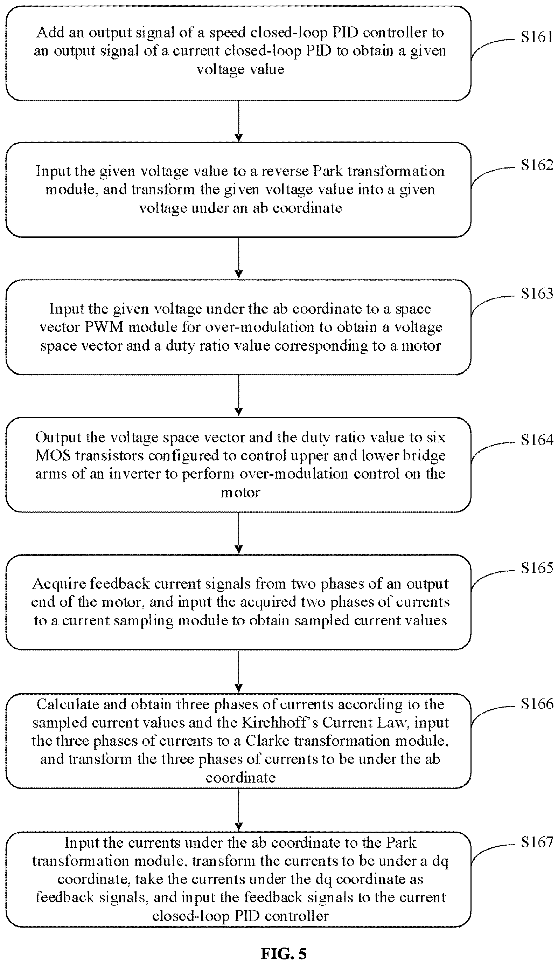

FIG. 5 is a schematic diagram of over-modulation control of motors according to some embodiments of this specification. As shown in FIG. 5, the step that control signals are output to the inverter by using a PID according to the voltage space vectors of the motors and the corresponding duty ratios, and over-modulation control is performed on the motors includes: S161, an output signal of a speed closed-loop PID controller is added to an output signal of a current closed-loop PID to obtain the given voltage value; S162, the given voltage value is input to a reverse Park transformation module, and the given voltage value is transformed into a given voltage under an $\alpha\beta$ coordinate; S163, the given voltage under the $\alpha\beta$ coordinate is input to an over-modulation space vector PID module to obtain the voltage space vector and the duty ratio corresponding to each motor; S164, the voltage space vector and the duty ratio are output to six MOS transistors configured to control upper and lower bridge arms of the inverter to perform over-modulation control on the motor; S165, feedback current signals are acquired from two phases of an output end of the motor, and the acquired two phases of currents are input to a current sampling module to obtain sampled current values; S166, three phases of currents are calculated and obtained according to the sampled current values and the Kirchhoff's Current Law, and the three phases of currents are input to a Clarke transformation module and are transformed to be under the $\alpha\beta$ coordinate; and S167, the currents under the $\alpha\beta$ coordinate are input to the Park transformation module and are transformed to be under a dq coordinate; and the currents under the dq coordinate are taken as feedback signals which are input to the current closed-loop PID controller.

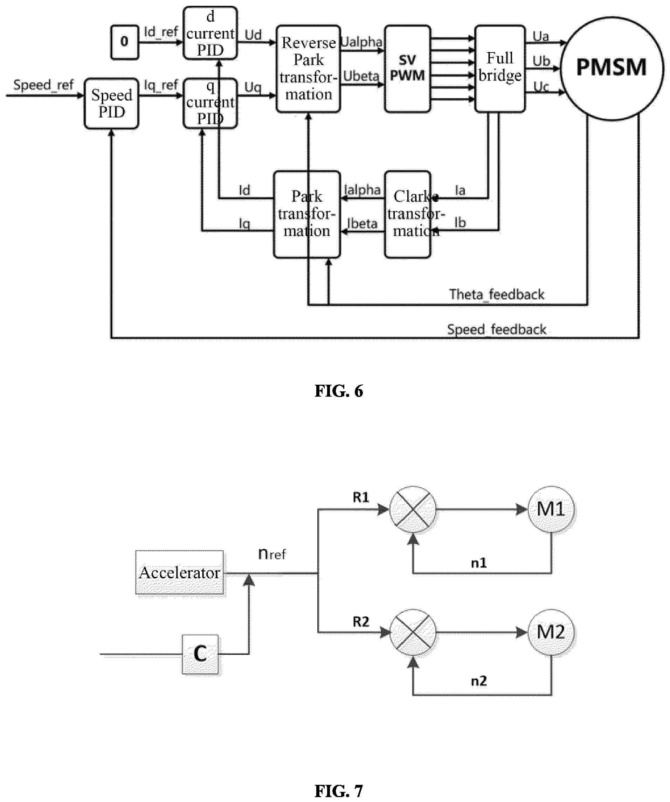

FIG. 6 is a schematic diagram of motor vector transformation according to some embodiments of this specification. As shown in FIG. 6, the $\alpha\beta$ coordinate is a rotating coordinate system in motor vector control, wherein an $\alpha$ axis is consistent with a direction of a magnetic axis of a rotor of each motor; a $\beta$ axis is perpendicular to the $\alpha$ axis; and the $\alpha\beta$ coordinate system rotates together with the rotor of the motor. The dq coordinate is a static coordinate system obtained by rotation transformation performed on the $\alpha\beta$ coordinate system, wherein a d axis is consistent with the direction of the magnetic axis of the rotor; and a q axis is perpendicular to the d axis. The dq coordinate system is static relative to the rotor. The three phases of currents are transformed to the $\alpha\beta$ coordinate system and is then transformed to the dq coordinate system through Park transformation: Clarke transformation: $i\alpha\beta$ = Ciabc, and Park transformation: idq = P($\theta$)i$\alpha\beta$, wherein C and P($\theta$) are Clarke and Park transformation matrixes. In this solution, the two phases of currents are acquired; the currents under the $\alpha\beta$ coordinate are obtained through Clarke transformation; the currents are then transformed to the dq coordinate system through Park transformation and are used as feedbacks of the current closed-loop PID controller. The six MOS transistors of the upper and lower bridge arms of the inverter perform over-modulation control on the motor. The three phases of currents are calculated and obtained according to the sampled current values and the Kirchhoff's Current Law. The three phases of currents are input to the Clarke transformation module and are transformed to be under the $\alpha\beta$ coordinate.

In this embodiment, the feedback signals ia and ib of the two phases of currents are acquired from the output end of the motor. A third phase of current ic can be deduced according to the Kirchhoff's Current Law: ic = -ia - ib, so that feedback signals of the three phases of currents can be obtained: ia, ib, and ic. The three phases of currents are input to the Clarke transformation module for $\alpha\beta$ transformation: The purpose of Clarke transformation is to transform the three phases of currents to be under the $\alpha\beta$ rotating coordinate system for subsequent Park transformation to the dq coordinate system. In the $\alpha\beta$ coordinate system, current components consistent with directions of the magnetic axis and a potential axis can be respectively obtained.

Two driving motors can be separately and precisely controlled using vector control and the Clarke and Park transformations to harmoniously control a steering motion of the vehicle. The feedback currents achieve a current closed-loop, so as to suppress the influence of the instability factors of the motors on steering. The over-modulation control increases the torque, and the closed-loop control improves the precision. Combining the over-modulation control and the closed-loop control greatly improve the precision of steering control of the vehicle.

Specifically, the corresponding voltage space vector and duty ratio are calculated through the space vector PWM module for over-modulation according to the given voltage under the coordinate, and are then output to the six MOS transistors configured to control the upper and lower bridge arms of the inverter. The feedback signals of the two phases of currents are acquired from the output end of the motor and are sampled through the current sampling module for calculation to obtain the three-phases of currents. The currents are transformed to be under the coordinate through Clarke transformation and the Park transformation and are used as the feedback signals input to the current closed-loop PID controller. This current feedback control can monitor changes of currents of the motors in real time and adjust the currents to keep the stability and accuracy of outputs of the motors.

In this embodiment, a target angular speed $\omega^*$=10 deg/s is input, and a given current value I*=15 A is output via the speed PID controller. I* is input to an over-modulation determining module. If a given voltage exceeds the hexagonal range, the over-modulation is confirmed. An over-modulation vector Uover=380 V is selected, which is transformed to U$\alpha$=340 V, Up=180 V under the $\alpha\beta$ coordinate via reverse Park transformation. U$\alpha\beta$ is input to the SVPWM module, and a PWM signal is output. The duty ratio is 75%. The PWM signal drives the inverter to output an over-modulation voltage Uover, so that the motor achieves a rotating speed of 10 deg/s. The feedback current I=13 A is input to the current PID controller. In this way, the over-modulation control can provide a large torque and enable the vehicle to smoothly complete a steering radius of d/$\omega^*$=0.2 m.

FIG. 7 is a flowchart of an over-modulation algorithm of motors according to some embodiments of this specification. As shown in FIG. 7, the step that the motors control differential steering of the vehicle through PWM signals includes: an upper computer outputs target rotating speed control signals $\omega l_1$ and $\omega r_1$ of the left and right wheels of the vehicle; $\omega l_1$ and $\omega r_1$ are inupt to the speed closed-loop PID controller; the speed closed-loop PID controller outputs PWM control signals of the motors of the left and right wheels; the motors of the left and right wheels controls rotating speeds $\omega l_2$ and $\omega r_2$ of the wheels according to the PWM signals; the rotating speeds $\omega l_2$ and $\omega r_2$ of the wheels are acquired and are fed back to the speed closed-loop PID controller, wherein if $\omega l_2 = \omega r_2$, the vehicle is driven along a straight line; and if $\omega l_2 \neq \omega r_2$, a driving trajectory of the vehicle is a concentric arc.

The upper computer outputs the target speeds of the left and right wheels. The PWM control signals are calculated and output through the speed closed-loop PID. The rotating speeds of the left and right wheels are adjusted in real time to achieve follow-up control of the rotating speeds. When the rotating speeds of the left and right wheels are consistent, the vehicle is driven along the straight line; and when the rotating speeds are inconsistent, the vehicle has a differential speed and precisely achieves an arc steering motion. Compared with open-loop control, the closed-loop control can eliminate the influence of load disturbance and parameter errors. Compared with single-closed-loop control, double-closed-loop control enhances the control effect, and the steering control is precise and flexible.

Specifically, through the closed-loop PID control and the rotating speed feedbacks, the system can precisely adjust the output of the motor, so as to achieve accurate steering control. A response to differential steering is more precise. The vehicle can be driven according to an expected steering direction. By the adoption of the PID control and rotating speed feedback mechanisms, the system can monitor and adjust the rotating speeds of the wheels in real time, so as to make a quick response to a steering requirement of the vehicle.

In this embodiment, the upper computer respectively outputs the target rotating speed control signals $\omega l_1$ and $\omega r_1$ of the left and right wheels, for example, $\omega l_1$ =10 rad/s and $\omega r_1$ =15 rad/s; $\omega l_1$ and $\omega r_1$ are input to the speed PID controller, and the PWM control signals Duty_l and Duty_r are output; the motors of the left and right wheels control the rotating speeds $\omega l_2$ =10 rad/s and $\omega r_2$ =15 rad/s of the left and right wheels according to Duty_l and Duty_r; and the rotating speed feedbacks $\omega l_2$ and $\omega r_2$ of the left and right wheels are acquired and input to the speed PID controller. In this embodiment, vehicle parameters are as follows: If a wheel track is =1 m, a steering radius of the vehicle is R=d/($\omega l_2$/$\omega r_2$-$\omega r_2$/$\omega l_2$)=5 m.

In summary, according to the flow of the over-modulation algorithm of the motor shown in the figure, the PWM signals are used to control differential steering of the vehicle, so that the precision of differential steering control of the vehicle can be improved. These technical features achieve precise steering control, improve the instantaneity and responsiveness, and improve the stability, thus improving the precision and controllability of differential steering control.

**Claims**

1. A differential steering control precision for a vehicle, comprising:

   acquiring rotating speeds of left and right motors, and obtaining feedback speeds;
   setting speeds of left and right wheels of the vehicle, and obtaining target speeds;
   comparing the feedback speeds with the target speeds, and obtaining given current values of currents of the left and right motor through a proportion integration differentiation (PID) controller;
   acquiring the currents of the left and right motor, and obtaining feedback current values;
   comparing the given current values with the feedback current values, and obtaining given voltage values of voltages of the left and right motors through the PID controller;
   calculating a modulation ratio M of voltage vectors of the left and right motors, and indicating, when M is greater than $M_0$, that the motors have entered an over-modulation mode;
   in the over-modulation mode, calculating and obtaining, according to the given voltage values, voltage space vectors of the motors and corresponding duty ratios by using space vector pulse width modulation (PWM);
   outputting control signals to an inverter by using a digital signal processor (DSP) according to the voltage space vectors of the motors and the corresponding duty ratios, and performing over-modulation control on the motors; and
   enabling the motors to control differential steering of the vehicle through PWM signals.

2. The differential steering control method according to claim 1, wherein
   the step of comparing the given current values with the feedback current values, and obtaining given voltage values of voltages of the left and right motors through the PID controller comprises:

   calculating difference values between the given current values and the feedback current values to obtain current errors e(k); and
   outputting the given voltage values u(k) according to the current errors e(k) by using the PID controller.

3. The differential steering control method according to claim 2, wherein

   the given voltage values u(k) are calculated through the following formula:

   $$u(k) = Kp * e(k) + Ki * \sum e(k) + Kd * (e(k) - e(k-1))$$

   wherein Kp is a proportional gain of the PID controller; Ki is an integral gain of the PID controller; Kd is a differential gain of the PID controller; e(k) is an error between the given current values and the feedback current values at a current sampling moment; and e(k - 1) is an error between the given current values and the feedback current values at a previous sampling moment.

4. The differential steering control method according to claim 1, wherein
   the step of calculating a modulation ratio M of voltage vectors of the left and right motors, and indicating, when M is greater than the threshold $M_0$, that the motors have entered an over-modulation mode comprises:

   a three-phase bridge type voltage inverter comprises six non-zero voltage space vectors and two zero voltage space vectors, and a direct current bus voltage of the inverter is $U_{dc}$;
   a radius $U_{max}$ of an inscribed circle of the hexagon is determined if the six non-zero voltage space vectors form a hexagon;
   when a given voltage vector exceeds a range of the hexagon, that is, when the modulation ratio M is greater than the threshold $M_0$, the motor enters the over-modulation mode;
   the modulation ratio M is calculated through the following formula:

$$M = U_{max}/U_{dc}$$

wherein $U_{max}$ is the radius of the inscribed circle of the hexagon, which represents a maximum output voltage vector amplitude of the inverter.

5. The differential steering control method according to claim 4, wherein
the step of: in the over-modulation mode, calculating and obtaining, according to the given voltage values, voltage space vectors of the motors and corresponding duty ratios by using PWM comprises:

determining whether the modulation ratio M is greater than the threshold $M_0$;
when the modulation ratio M is greater than the threshold $M_0$, indicating that the given voltage vector $U_{ref}$ exceeds the range of the hexagon, and selecting a substitute voltage vector $U_{alt}$ of the given voltage vector $U_{ref}$;
calculating action time $T_0$ when the substitute voltage vector is a zero voltage vector $U_0$; and
calculating, according to the action time $T_0$ of the zero voltage vector, the voltage space vector $U_{out}$ and the corresponding duty ratio $D_{out}$ by using the PWM.

6. The differential steering control method according to claim 5, wherein

the action time $T_0$ of the zero voltage vector $U_0$ is used as a start point of determining over-modulation; when $T_0$ is less than zero, it is determined that the over-modulation mode is activated;
action time $T_i$ of a basic voltage vector of an ith moment is calculated, wherein

$$T_i = T_s * \sin\theta_1 * U_{max}/U_{dc}$$

action time $T_{i+1}$ of a basic voltage vector of an (i+1)th moment is calculated, wherein

$$T_{i+1} = T_s * \sin\theta_2 * U_{max}/U_{dc}$$

action time $T_s$ of the given voltage vector $U_{ref}$ within an original PWM cycle before over-modulation occurs is calculated;
$T_0$ is calculated through the following formula:

$$T_0 = T_s - T_i - T_{i+1}$$

wherein $\theta_1$ and $\theta_2$ are electric angles of the basic voltage vectors at the ith moment and the (i+1)th moment; an angle sum of $\theta_1$ and $\theta_2$ is $\pi/3$; $U_{ref}$ is the given voltage vector; $U_{alt}$ is the substitute voltage vector; $U_0$ is the zero voltage vector; $T_0$ is the action time of the zero voltage vector; $T_i$ and $T_{i+1}$ are respectively the action times of the basic voltage vector at the ith moment and the (i+1)th moment; $T_s$ is action time of the given voltage vector $U_{ref}$ within a current PWM cycle; $U_{max}$ is the direct current bus voltage; and $U_{dc}$ is a direct current voltage.

7. The differential steering control method according to claim 6, wherein

the voltage space vector $U_{out}$ and the corresponding duty ratio $D_{out}$ are calculated by using the PWM according to the action time $T_0$ of the zero voltage vector;
a position of the voltage space vector is determined by using a space vector PWM calculation method according to the action time $T_0$ of the zero voltage vector $U_0$, the action times $T_i$ and $T_{i+1}$ of the basic voltage vectors, and time $T_s$ of a PWM cycle; and
a projection of the voltage space vector under a three-phase coordinate and a time proportion corresponding to the voltage space vector are calculated as a duty ratio of each bridge arm of the inverter according to the position of the voltage space vector, a maximum amplitude $U_{max}$ of the direct current bus voltage, and the direct current voltage $U_{dc}$.

8. The differential steering control method according to claim 1, wherein
the step of outputting control signals to an inverter by using a DSP according to the voltage space vectors of the motors and the corresponding duty ratios, and performing over-modulation control on the motors comprises:

adding an output signal of a speed closed-loop PID controller to an output signal of a current closed-loop PID to obtain the given voltage value;

inputting the given voltage value to a reverse Park transformation module, and transforming the given voltage value into a given voltage under an $\alpha\beta$ coordinate;

inputting the given voltage under the $\alpha\beta$ coordinate to a space vector PWM module for over-modulation to obtain the voltage space vector and the duty ratio corresponding to each motor;

outputting the voltage space vector and the duty ratio to six metal oxide semiconductor (MOS) transistors configured to control upper and lower bridge arms of the inverter to perform over-modulation control on the motor;

acquiring feedback current signals from two phases of an output end of the motor;

inputting the acquired two phases of currents to a current sampling module to obtain sampled current values;

calculating and obtaining three phases of currents according to the sampled current values and the Kirchhoff's Current Law;

inputting the three phases of currents to a Clarke transformation module, and transforming the three phases of currents to be under the $\alpha\beta$ coordinate;

inputting the currents under the $\alpha\beta$ coordinate to the Park transformation module, and transforming the currents to be under a dq coordinate; and

taking the currents under the dq coordinate as feedback signals, and inputting the feedback signals to the current closed-loop PID controller.

9. The differential steering control method according to claim 1, wherein
the step of enabling the motors to control differential steering of the vehicle through PWM signals comprises:

outputting, by an upper computer, target rotating speed control signals $\omega l_1$ and $\omega r_1$ of the left and right wheels of the vehicle;

inputting $\omega l_1$ and $\omega r_1$ to the speed closed-loop PID controller;

outputting, by the speed closed-loop PID controller, PWM control signals of the motors of the left and right wheels;

controlling, by the motors of the left and right wheels, rotating speeds $\omega l_2$ and $\omega r_2$ of the left and right wheels of the vehicle according to the PWM signals; and

acquiring the rotating speeds $ml_2$ and $\omega r_2$ of the left and right wheels of the vehicle, and feeding back the rotating speeds to the speed closed-loop PID controller,

wherein when the rotating speeds $\omega l_2$ and $\omega r_2$ of the left and right wheels of the vehicle are equal, the vehicle is driven along a straight line; and when the rotating speeds $\omega l_2$ and $\omega r_2$ of the left and right wheels of the vehicle are unequal, a driving trajectory of the vehicle is a concentric arc.

Acquire rotating speeds of left and right motors, obtain feedback speeds, set speeds of left and right wheels of a vehicle, and obtain target speeds — S110

Compare the feedback speeds with the target speeds, and obtain given current values of currents of the left and right motors through a PID controller — S120

Acquire the currents of the left and right motors, obtain feedback current values, compare the given current values with the feedback current values, and obtain given voltage values of voltages of the left and right motors through the PID controller — S130

Calculate a modulation ratio M of voltage vectors of the left and right motors, and indicate, when M is greater than M0, that the motors have entered an over-modulation mode — S140

In the over-modulation mode, calculate and obtain, according to the given voltage values, voltage space vectors of the motors and corresponding duty ratio values by using a space vector PWM — S150

Output control signals to an inverter by using a DSP according to the voltage space vectors of the motors and the corresponding duty ratio values, and perform over-modulation control on the motors — S160

Control, by the motors, differential steering of the vehicle through PWM signals — S170

**FIG. 1**

Obtain six non-zero voltage space vectors and two zero voltage space vectors of a three-phase bridge type voltage inverter ⎯ S141

Obtain a radius of an inscribed circle of the hexagon as the six non-zero voltage space vectors form a hexagon ⎯ S142

Indicate, when a given voltage vector exceeds a range of the hexagon, that is, when a modulation ratio M is greater than a threshold, that motors have entered an over-modulation mode ⎯ S143

**FIG. 2**

**FIG. 3**

Start

$T_i$, $T_{i+1}$, $T_0$: Calculate $T_i$, $T_{i+1}$, $T_0$ according to a sinusoidal modulation algorithm

$T_0 < 0$ ?

Yes

No

$T_i \geq T_{i+1}$ ?

Yes

No

$T_i > T_s$ ?

$T_{i+1} > T_s$ ?

Yes

No

$T_i{'} = T_s$

No — Yes

$T_{i+1}{'} = T_s$

$T_{i+1}{'} = 0$

$T_i{'} = T_i * T_s / (T_i + T_{i+1})$

$T_i{'} = 0$

$T_{i+1}{'} = T_{i+1} * T_s / (T_i + T_{i+1})$

Output $T_i$, $T_{i+1}$, $T_0$

$T_0{'} = 0$

Output $T_i = T_i{'}$, $T_{i+1} = T_{i+1}{'}$, $T_0{'} = T_0$

End

**FIG. 4**

Add an output signal of a speed closed-loop PID controller to an output signal of a current closed-loop PID to obtain a given voltage value ⎯ S161

Input the given voltage value to a reverse Park transformation module, and transform the given voltage value into a given voltage under an ab coordinate ⎯ S162

Input the given voltage under the ab coordinate to a space vector PWM module for over-modulation to obtain a voltage space vector and a duty ratio value corresponding to a motor ⎯ S163

Output the voltage space vector and the duty ratio value to six MOS transistors configured to control upper and lower bridge arms of an inverter to perform over-modulation control on the motor ⎯ S164

Acquire feedback current signals from two phases of an output end of the motor, and input the acquired two phases of currents to a current sampling module to obtain sampled current values ⎯ S165

Calculate and obtain three phases of currents according to the sampled current values and the Kirchhoff's Current Law, input the three phases of currents to a Clarke transformation module, and transform the three phases of currents to be under the ab coordinate ⎯ S166

Input the currents under the ab coordinate to the Park transformation module, transform the currents to be under a dq coordinate, take the currents under the dq coordinate as feedback signals, and input the feedback signals to the current closed-loop PID controller ⎯ S167

**FIG. 5**

**FIG. 6**

**FIG. 7**

Europäisches
Patentamt

European
Patent Office

Office européen
des brevets

# EUROPEAN SEARCH REPORT

**Application Number**

EP 23 21 7042

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 106 915 385 A (UNIV TONGJI) 4 July 2017 (2017-07-04) | 1,2,4,5, 8 | INV. H02P5/00 |
| A | * The detection module includes * * The steering module includes * * The step 2 it is specially - in particular step 23) * * figures 1, 3, 4 * | 3,6,7,9 | H02P5/74 H02P21/00 H02P21/22 H02P27/08 |
| | ----- | | |
| Y | JP 2011 115033 A (AISIN AW CO) 9 June 2011 (2011-06-09) * paragraphs [0002], [0027], [0031], [0032] * * paragraphs [0030], [0035], [0043], [0084] * * figures 1, 2, 3 * | 1,2,4,5, 8 | |
| | ----- | | |
| Y | ALAHUHTALA J ET AL: "Space Vector Modulated and Vector Controlled Vienna I Rectifier with Active Filter Function", FOURTH POWER CONVERSION CONFERENCE, 2-5 APRIL 2007, NAGOYA, JAPAN, IEEE, PISCATAWAY, NJ, USA, 1 April 2007 (2007-04-01), pages 62-68, XP031178449, DOI: 10.1109/PCCON.2007.372949 ISBN: 978-1-4244-0843-6 * figure 5 * | 2 | |

**TECHNICAL FIELDS SEARCHED (IPC)**

H02P

-/--

The present search report has been drawn up for all claims

| Place of search | Date of completion of the search | Examiner |
|---|---|---|
| Munich | 10 June 2024 | Roider, Anton |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 23 21 7042

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | LINUS RAJIN M ET AL: "Implementation of Ackermann's Geometric Electronic Differential Model in PMSM Based Electric Vehicle", 2022 IEEE 6TH CONFERENCE ON INFORMATION AND COMMUNICATION TECHNOLOGY (CICT), IEEE, 18 November 2022 (2022-11-18), pages 1-5, XP034267275, DOI: 10.1109/CICT56698.2022.9997934 [retrieved on 2023-01-04] * figure 3 * | 2 | |
| Y | HONGCAI ZHAO ET AL: "Direct control of the synchronous motor stator flux linkage based on PWM", COMPUTER SCIENCE&EDUCATION, 2009. ICCSE '09. 4TH INTERNATIONAL CONFERENCE ON, IEEE, PISCATAWAY, NJ, USA, 25 July 2009 (2009-07-25), pages 498-503, XP031523622, DOI: 10.1109/ICCSE.2009.5228379 ISBN: 978-1-4244-3520-3 * figure 3 * | 4 | |
| Y | XU ZHENGHUA ET AL: "Over-modulation control strategy of SVPWM review", 2016 CHINESE CONTROL AND DECISION CONFERENCE (CCDC), IEEE, 28 May 2016 (2016-05-28), pages 3192-3196, XP032936994, DOI: 10.1109/CCDC.2016.7531532 [retrieved on 2016-08-03] * page 3193 - page 3194 * * chapters 2 and 3 * * figures 1, 2, 3 * | 5 | |

**TECHNICAL FIELDS SEARCHED (IPC)**

-/--

The present search report has been drawn up for all claims

| Place of search | Date of completion of the search | Examiner |
|---|---|---|
| Munich | 10 June 2024 | Roider, Anton |

EPO FORM 1503 03.82 (P04C01)

**Europäisches Patentamt**
**European Patent Office**
**Office européen des brevets**

# EUROPEAN SEARCH REPORT

Application Number

EP 23 21 7042

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | CN 109 672 381 B (UNIV NORTH CHINA TECHNOLOGY) 11 August 2020 (2020-08-11) * figure 1 * | 8 | |
| Y | CN 106 685 301 A (JIANGSU CAS JUNSHINE TECHNOLOGY CO LTD) 17 May 2017 (2017-05-17) * 2nd to 5th paragraph under The contents of the invention * * figure 2 * | 8 | |
| Y | CN 116 614 039 A (HEFEI GEYI INTEGRATED CIRCUIT CO LTD) 18 August 2023 (2023-08-18) * description of Fig.1 * * figure 1 * | 8 | |
| Y | MEHTA HRISHIKESH ET AL: "Vector control of PMSM using TI's launchpad F28069 and MATLAB embedded coder with incremental build approach", 2017 7TH INTERNATIONAL CONFERENCE ON POWER SYSTEMS (ICPS), IEEE, 21 December 2017 (2017-12-21), pages 771-775, XP033359444, DOI: 10.1109/ICPES.2017.8387393 [retrieved on 2018-06-15] * figure 1 * | 8 | TECHNICAL FIELDS SEARCHED (IPC) |
| Y | CN 106 533 307 A (UNIV NANJING SCIENCE & TECH) 22 March 2017 (2017-03-22) * Content of the invention * * figure 2 * | 8 | |

The present search report has been drawn up for all claims

| Place of search | Date of completion of the search | Examiner |
|---|---|---|
| Munich | 10 June 2024 | Roider, Anton |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 531 265 A1**

## ANNEX TO THE EUROPEAN SEARCH REPORT
## ON EUROPEAN PATENT APPLICATION NO.

EP 23 21 7042

10-06-2024

| Patent document cited in search report | | Publication date | Patent family member(s) | | Publication date |
|---|---|---|---|---|---|
| CN 106915385 | A | 04-07-2017 | NONE | | |
| JP 2011115033 | A | 09-06-2011 | JP | 5370769 B2 | 18-12-2013 |
| | | | JP | 2011115033 A | 09-06-2011 |
| CN 109672381 | B | 11-08-2020 | NONE | | |
| CN 106685301 | A | 17-05-2017 | NONE | | |
| CN 116614039 | A | 18-08-2023 | NONE | | |
| CN 106533307 | A | 22-03-2017 | NONE | | |

EPO FORM P0459

For more details about this annex : see Official Journal of the European Patent Office, No. 12/82

**EP 4 531 265 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 109672381 B